(19) Europäisches Patentamt
European Patent Office
Office européen des brevets

(11) **EP 0 853 750 B1**

(12) **EUROPÄISCHE PATENTSCHRIFT**

(45) Veröffentlichungstag und Bekanntmachung des Hinweises auf die Patenterteilung:
**08.03.2000 Patentblatt 2000/10**

(51) Int Cl.7: **F42C 11/00**, F42B 23/16

(86) Internationale Anmeldenummer:
**PCT/EP96/04042**

(21) Anmeldenummer: **96932531.5**

(22) Anmeldetag: **14.09.1996**

(87) Internationale Veröffentlichungsnummer:
**WO 97/13114 (10.04.1997 Gazette 1997/16)**

(54) **LANDMINE**

LAND MINE

MINE TERRESTRE

(84) Benannte Vertragsstaaten:
**FR GB**

(30) Priorität: **02.10.1995 DE 19536756**

(43) Veröffentlichungstag der Anmeldung:
**22.07.1998 Patentblatt 1998/30**

(73) Patentinhaber: **STN ATLAS Elektronik GmbH**
**28309 Bremen (DE)**

(72) Erfinder:
• **BECKER, Gunnar**
**D-28199 Bremen (DE)**
• **GÜDESEN, Alwin**
**D-27321 Morsum (DE)**
• **VAN LEYEN, Karl-Heinz**
**D-28329 Bremen (DE)**
• **WAGENER, Heiko**
**D-28357 Bremen (DE)**

(74) Vertreter:
**Schulz, Klaus, Patentassessor, Dipl.-Ing.**
**c/o STN Atlas Elektronik GmbH,**
**Patentabteilung**
**28305 Bremen (DE)**

(56) Entgegenhaltungen:
EP-A- 0 450 118        EP-A- 0 471 188
DE-A- 3 536 328        DE-A- 4 314 839
FR-A- 2 483 067

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Landmine der im Oberbegriff des Anspruchs 1 definierten Gattung.

Bei solchen sog. Flächenverteidigungsminen werden von der im Minengehäuse vorhandenen Überwachungsvorrichtung in das Überwachungsgebiet, das durch den Aktionsradius des Wirkkörpers der Mine festgelegt ist, eindringende Schallquellen, z.B. Panzer, Kraftfahrzeuge und dgl., bzgl. ihrer momentanen Position fortlaufend vermessen und daraus zeitabhängige Treffpunktdaten generiert, aufgrund derer der Wirkkörper der Minen aktiviert wird. Der Wirkkörper wird gerichtet aus dem Minengehäuse ausgeschossen und sinkt nach Durchlaufen einer ballistischen Kurvenbahn, vorzugsweise von einem Fallschirm gebremst, auf die detektierte Schallquelle herab, die dann von der explodierenden Sprengladung des Wirkkörpers zerstört wird. Die Effektivität dieser Flächenverteidigungsminen in der Bekämpfung von Bodenzielen ist abhängig von der Genauigkeit der Posititionsbestimmung der eindringenden Schallquelle und der Treffpunktberechnung durch die Überwachungsvorrichtung.

Bei einer bekannten Landmine für ein aus mindestens einer Minengruppe mit mindestens drei Minen bestehendes Minenfeld (DE 43 14 839 A1) weist die akustische Überwachungsvorrichtung der Mine drei Schallwandler auf, die an aus einem Grundgestell ausklappbaren Halterungen so befestigt sind, daß sie nach Ausklappen der Halterungen in einer horizontalen Ebene in den Eckpunkten eines gleichschenkligen Dreiecks liegen. Das Grundgestell steht mit mehreren Standfüßen auf dem Boden und nimmt den Wirkkörper auf. In einer Signalverarbeitungs- und Auswerteelektronik (Zielortungseinheit) werden aus den Eingangssignalen der Schallwellen deren Lauf- bzw. Empfangszeitdifferenzen bestimmt und daraus die Entfernung und Richtung zur Schallquelle errechnet. Da die drei Schallwandler der Mine eine Peilbasis mit nur geringen Abmessungen bilden, ist die Ortungsgenauigkeit der Schallquelle relativ gering. Zu deren Verbesserung werden die an den mindestens drei Minen innerhalb einer Minengruppe getrennt ermittelten Zieldaten über Funkfernverbindungen gegenseitig ausgetauscht und in den einzelnen Minen korreliert. Ein Abschuß des Wirkkörpers durch eine Zündeinheit erfolgt erst dann, wenn sowohl die von der Mine selbst als auch die von den anderen Minen ermittttelten Positionsdaten der Zielschallquelle innerhalb des Wirkungsbereichs der Mine liegen.

Bei einem auf Minenbasis operierenden Flächenverteidigungssystem (DE 35 36 328 A1) sind in einem auf dem Boden verlegten Minenfeld zahlreiche Minen mit projektilbildenden Ladungen vorhanden, von denen jede in einer Aufnahmeeinheit untergebracht ist. Im Innern der Aufnahmeeinheit ist die Mine durch Antriebsmittel verschwenkbar. Ein in Entfernung zum Minenfeld getarnt untergebrachtes Erfassungsgerät weist ein Schallortungsgerät auf, das imstande ist, die zeitliche Position eines Flugkörpers in bezug auf das Koordinatensystem des Erfassungsgeräts zu ermitteln, die Flugbahn zu bestimmen und eine Voraussage über dessen zukünftige Position zu einem möglichen Treffpunkt durch die Minenprojektile zu machen. Durch entsprechende Ansteuerung der Antriebsmittel in den Aufnahmeeinheiten werden alle Minen so ausgerichtet, daß ihre Wirkrichtung auf die zukünftige Position ausgerichtet ist.

Bei einer ebenfalls bekannten Landmine zur Helikopter-Bekämpfung (EP 0 450 118 A1) sind in einem Minengehäuse, das mit einem Hubantrieb zum Hochschießen der Mine vor deren Explosion versehen ist, eine Sprengladung, vier gegeneinander um 90° versetzt angeordnete Mikrofone und ein Prozessor integriert, der die Ausgangssignale der Mikrofone verarbeitet, und den Hubantrieb aktiviert, wenn eine Analyse der Mikrofonausgangssignale zeigt, daß ein Helikopter an einer bestimmten Stelle oberhalb der Mine ist. Der Hubantrieb treibt die Mine nach oben, und nach einer vorgegebenen Zeit wird die Sprengladung gezündet. Die vier Mikrofone dienen dazu, eine von vier vorgegebenen Richtungen festzustellen, aus der sich der Helikopter momentan nähert. Die Mikrofone können auch außerhalb des Minengehäuses um jeweils 90° Umfangswinkel gegeneinander versetzt aufgestellt werden und bleiben über jeweils ein elektrisches Verbindungskabel mit dem Prozessor im Minengehäuse verbunden.

Der Erfindung liegt die Aufgabe zugrunde, bei einer Landmine der eingangs genannten Art, die Überwachungsvorrichtung so auszubilden, daß eine recht genaue Positionvermessung der Schallquelle ohne Mithilfe von Überwachungsvorrichtungen weiterer Minen sichergestellt ist.

Die Aufgabe ist bei einer Landmine der im Oberbegriff des Anspruchs 1 angegebenen Gattung erfindungsgemäß durch die Merkmale im Kennzeichenteil des Anspruchs 1 gelöst.

Durch die erfindungsgemäße Aufteilung der Mikrofone auf zwei voneinander weit entfernte Meßorte, deren maximaler Abstand von der Länge des Verbindungskabels festgelegt ist, werden stabile akustische Messungen mittels einer Apertur möglich, deren Größe dem Überwachungsgebiet angepaßt ist und die damit relativ genaue Meßwerte liefert. Jede Mikrofongruppe gibt fortlaufend Peilwinkel zu der in das Überwachungsgebiet eingedrungenen Schallquelle aus, und die Signalverarbeitungs- und Auswerteelektronik berechnet aus den Peilwinkeln nach bekannten trigonometrischen Funktionen fortlaufend die Position der Schallquelle und bestimmt aus den Positionsänderungen Fahrtrichtung und Fahrgeschwindigkeit der Schallquelle und daraus unter Berücksichtigung der Schießdaten des Wirkkörpers den voraussichtlichen Treffpunkt, an dem die eingedrungene Schallquelle von der Mine effektiv bekämpft werden kann.

Die erfindungsgemäße Landmine kann verschossen, ausgeworfen oder ausgelegt werden, wobei sie ihre Funktionsstellung nach Ausbringen selbsttätig herstellt.

Zweckmäßige Ausführungsformen der erfindungsgemäßen Landmine mit vorteilhaften Weiterbildungen und Ausgestaltungen der Erfindung ergeben sich aus den weiteren Ansprüchen.

Gemäß einer vorteilhaften Ausführungsform der Erfindung ist die Zuordnung der Mikrofone so getroffen, daß jede Mikrofongruppe nach Trennen des Trägerkörpers vom Minengehäuse ein großflächiges Array mit verteilt angeordneten Mikrofonen bildet. Dadurch haben bereits die von den beiden Mikrofongruppen getrennt ermittelten Peilwinkel zu einer eindringenden Schallquelle eine hohe Meßgüte, was die Genauigkeit der Positionsbestimmung wesentlich verbessert.

Gemäß einer bevorzugten Ausführungsform der Erfindung sind die Mikrofone der dem Minengehäuse zugeordneten Mikrofongruppe an jeweils einem der von dem Minengehäuse abgekehrten Enden der Aufrichtbeine und die Mikrofone der dem Trägerkörper zugeordneten Mikrofongruppe an jeweils einem vom Trägerkörper abgekehrten Ende eines Tragarms einer Mehrzahl von vom Trägerkörper abschwenkbaren Tragarmen angeordnet. Bevorzugt sind dabei die Aufrichtbeine und die Tragarme jeweils gleichmäßig am Umfang des Minengehäuses bzw. des Trägerkörpers verteilt angelenkt und über Gelenkpunkte mehrfach gefaltet am Minengehäuse bzw. Trägerkörper festgelegt. Nach Verbringen der Mine und Trennen des Trägerkörpers von dem Minengehäuse schwenken die Aufrichtbeine und die Tragarme selbsttätig von dem Minengehäuse bzw. Trägerkörper ab, wobei die gefalteten Aufrichtbeine und Tragarme in ihre Strecklage übergehen, an deren Ende sich die Mikrofone befinden. Durch diese konstruktive Ausgestaltung der Erfindung wird trotz begrenztem Einbauvolumen im Minengehäuse von jeder Mikrofongruppe ein großflächiges Array aufgespannt, in welchem die Mikrofone auf einen Kreisbogen mit einem großen Durchmesser äquidistant zueinander angeordnet sind. Dabei kann ein Durchmesser von einem Meter problemlos realisiert werden. Diese Arraygröße ist ausreichend, um aus den Mikrofonausgangssignalen einer jeden Mikrofongruppe zuverlässige Peilwinkelwerte zu bestimmen.

Gemäß einer vorteilhaften Ausführungsform der Erfindung ist zur Bestimmung der Peilwinkel jeder Mikrofongruppe ein Beamformer zugeordnet, der in bekannter Weise die Empfangssignale der einzelnen Mikrofone der Mikrofongruppe einer Laufzeitbewertung unterzieht, die bewerteten Empfangssignale aufsummiert und die Summe mit der größten Empfangsamplitude ermittelt. Der Beamformer für die dem Trägerkörper zugeordnete Mikrofongruppe wird vorteilhafterweise in dem Trägerkörper selbst integriert, so daß über das Verbindungskabel zu der im Minengehäuse enthaltenen Signalverarbeitungs- und Auswerteelektronik lediglich die Peilwinkelsignale übertragen werden müssen.

Da nach Ausbringen der Mine und Trennen des Trägerkörpers von dem Minengehäuse die Lage beider zueinander von Zufallsgrößen abhängig ist, muß die tatsächliche geometrische Lage von Minengehäuse und Trägerkörper zueinander bestimmt werden. Hierzu ist gemäß einer weiteren Ausführungsform der Erfindung im Trägerkörper ein von der Signalverarbeitungs- und Auswerteelektronik aktivierbarer akustischer Sender angeordnet, der auf ein Steuersignal hin Schallimpulse aussendet. Aus den Empfangssignalen der Mikrofone, die dem Minengehäuse zugeordnet sind, wird von der Signalverarbeitungs- und Auswerteelektronik im Minengehäuse die Laufzeit der Schallimpulse und die Schalleinfallsrichtung der Schallimpulse bestimmt und daraus die Entfernung und der Peilwinkel in einem festgelegten Koordinatensystem oder einer vorgegebenen Bezugslinie zum Trägerkörper berechnet.

Gemäß einer weiteren Ausführungsform der Erfindung sendet der Sender eine Vielzahl von Schallimpulsen aus und die Signalverarbeitungs- und Auswerteelektronik berechnet aus den Mikrofonausgangssignalen eine Vielzahl von Entfernungs- und Peilrichtungswerten. Die Schallimpulsaussendung wird beendet, wenn die Rechenwerte gegen vorgegebene Konfidenzintervalle konvergieren. Die Peilrichtung wird wieder durch Beamforming ermittelt. Zusätzlich kann noch der Einfluß der Temperatur auf die Schallgeschwindigkeit berücksichtigt werden, so daß eine hochgenaue Kalibrierung der Überwachungsvorrichtung vorgenommen wird.

Die Verbindung des Trägerkörpers mit dem Minengehäuse und die Art der Trennung des Trägerkörpers vom Minengehäuse kann je nach Anwendungsfall unterschiedlich getroffen werden. Bei einer durch Verschießen oder Auswerfen verbringbaren Landmine wird gemäß einer bevorzugten Ausführungsform der Erfindung der Trägerköper scheibenförmig mit an den Außenmaßen des Minengehäuses angepaßte Abmessungen ausgebildet und an einer der Stirnseiten des Minengehäuses, vorzugsweise an dessen Unterseite, in einer lösbaren Haltevorrichtung aufgenommen. Während der Sinkphase der Mine wird dann in einem bestimmten Abstand über dem Erdboden die Haltevorrichtung automatisch gelöst, so daß Minengehäuse und Trägerköper voneinander getrennt zur Erde fallen, wobei sich das im Trägerkörper aufgenommene Verbindungskabel abwickelt. Vorteilhafterweise ist in der Haltevorrichtung noch ein Abstoßglied vorgesehen, das den freigegebenen Trägerkörper eine Querbeschleunigung, bezogen auf die Minengehäuseachse, verleiht, so daß sichergestellt ist, daß Minengehäuse und Trägerkörper in einem möglichst großen Abstand voneinander auf dem Erdboden auftreffen.

In einer alternativen Ausführungsform der Erfindung ist der Trägerkörper mit einem pyrotechnischen Treibsatz in einem Auswurfzylinder zusammengefaßt, der in einer Auswurfkammer im Minengehäuse aufgenommen ist. Die am Trägerkörper angelegten gefalteten Tragarme liegen axial im Auswurfkörper ein. Nach Auftreffen der Mine auf dem Erdboden und Aufrichten des Minengehäuses durch die Aufrichtbeine wird der Auswurfzylinder durch Zündung des pyrotechnischen Treibsatzes aus dem Minengehäuse ausgeschossen, wobei das im Auswurfzylinder aufgetrommelt aufgenommene Verbindungskabel sich nach und nach abspult. Eine Länge des Verbindungskabels von ca. 20 m ist für eine ausreichend genaue akustische Meßfunktion der Überwachungsvorrichtung ausreichend.

Die Erfindung ist anhand von in der Zeichnung dargestellten Ausführungsbeispielen im folgenden näher beschrieben. Es zeigen jeweils in schematischer Darstellung:

Fig.1 eine Seitenansicht einer Landmine vor ihrem Ausbringen,

Fig.2 eine vergrößerte Darstellung des Ausschnitt II in Fig.1, mit ausgeklapptem Aufrichtbein,

Fig. 3 eine Seitenansicht der Mine in Fig.1 während der Verbringungsphase,

Fig. 4 eine Seitenansicht des Minengehäuses der Landmine in Fig.1 nach Verbringung der Mine, teilweise geschnitten,

Fig. 5 eine Draufsicht des Trägerkörpers der Landmine in Fig.1 nach Verbringung der Mine,

Fig. 6 eine Seitenansicht des Trägerkörpers in Fig. 5, teilweise geschnitten,

Fig. 7 ein Szenarium einer ausgebrachten Landmine mit einem in das Überwachungsgebiet der Landmine eindringenden Kettenfahrzeug,

Fig. 8 eine Draufsicht einer Landmine gemäß einem weiteren Ausführungsbeispiel,

Fig. 9 eine Seitenansicht der Landmine in Fig.8, teilweise geschnitten,

Fig. 10 einen Längsschnitt eines Auswurfzylinders in der Landmine gemäß Fig.8 und 9,

Fig. 11 eine Draufsicht des Trägerkörpers der Landmine in Fig.8 und 9 nach deren Ausbringung.

Fig. 12 eine Skizze zur Erklärung der Kalibrierung einer Überwachungsvorrichtung nach Ausbringen der Landmine gemäß Fig.7.

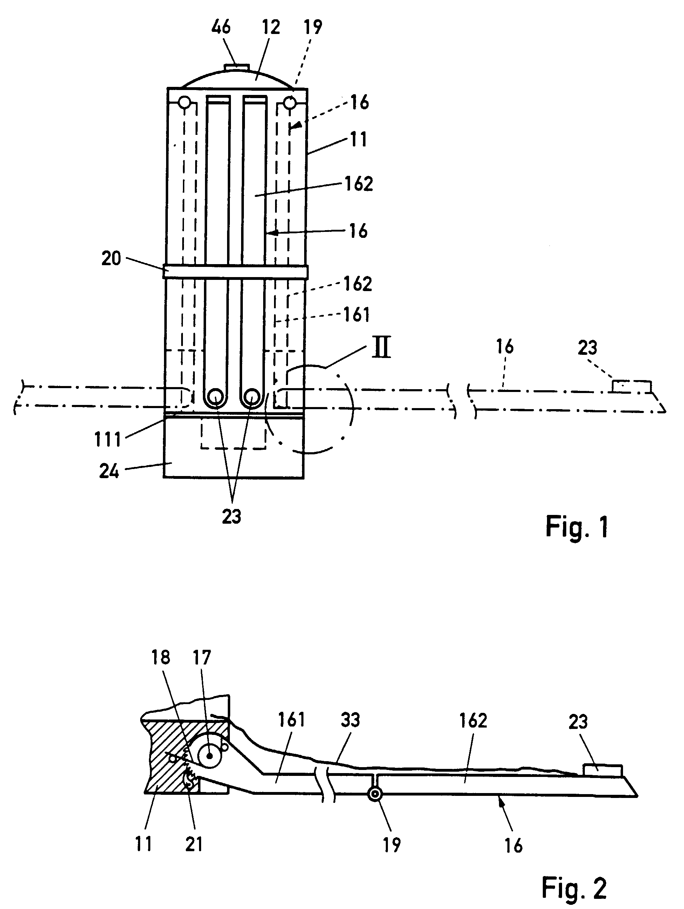

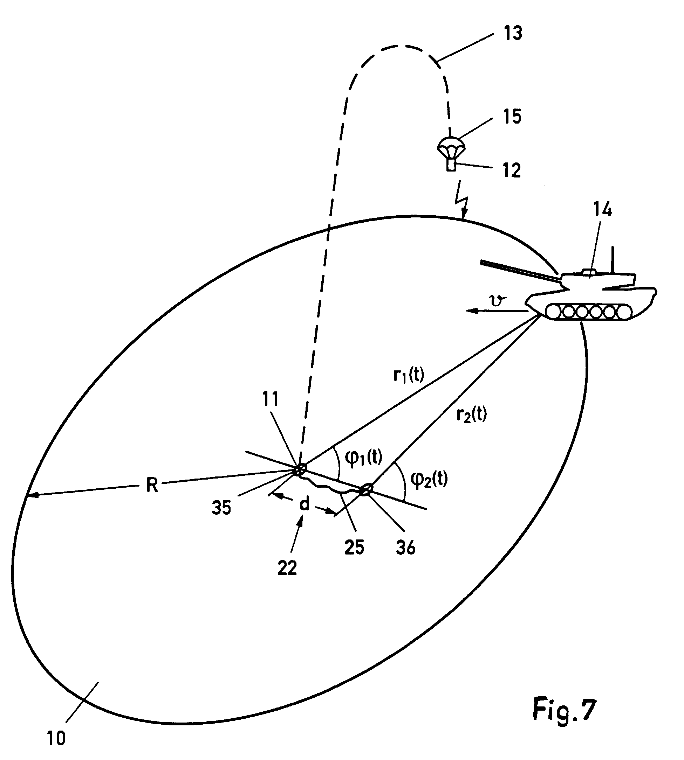

Die in Fig.1 in Seitenansicht schematisch dargestellte Landmine weist ein Minengehäuse 11 auf, in dem ein Sprengmunition enthaltender Wirkkörper 12 aufgenommen ist, der in vertikal aufgerichteter Lage des Minengehäuses 11 aus diesem gerichtet ausgeschossen wird, um nach Durchlaufen einer ballistischen Wegkurve 13 (Fig.7) ein Ziel 14 von oben her zu bekämpfen. In der Endphase wird die Sinkgeschwindigkeit des Wirkkörpers 12 mittels eines Bremsfallschirms 15 reduziert und die Sprengladung in einer bestimmten Höhe oberhalb des Ziels 14 gezündet. Die Richtbarkeit des Wirkkörpers 12 innerhalb des Minengehäuses 11 sowie die dem Wirkkörper 12 verliehene Anfangsbeschleunigung legen den Aktionsradius R des Wirkkörpers 12 fest, innerhalb dessen er ein Ziel 14 wirksam bekämpfen kann.

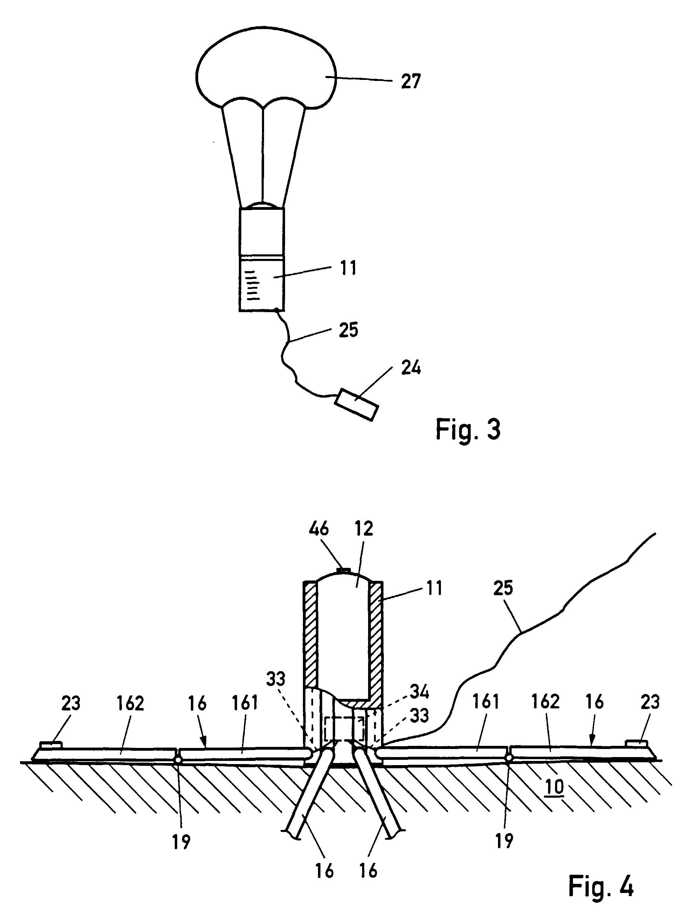

Zur Sicherstellung der für den Ausstoß des Wirkkörpers 12 unerläßlichen vertikalen Ausrichtung des Minengehäuses 11, sind im Minengehäuse 11 eine Mehrzahl, hier sechs von Aufrichtbeinen 16 vorgesehen, die bei der Verbringung der Mine im Minengehäuse 11 vorzugsweise bündig einliegen und nach Ausbringen der Mine, also bei Aufliegen des Minengehäuses 11 auf dem Erdboden 10, automatisch ausklappen und dadurch das Minengehäuse 11 aufrichten. Wie in Fig.1 und 2 zu erkennen ist, sind die Aufrichtbeine 16 am Umfang des Minengehäuses 11 äquidistant angeordnet und mittels einer quer zur Längsachse des Minengehäuses 11 ausgerichteten Gelenkachse 17 schwenkbar im Minengehäuse 11 aufgenommen. Eine auf der Gelenkachse 17 sitzende Drehfeder 18, deren Schenkel sich am Minengehäuse 11 und am Aufrichtbein 16 abstützen, spannt jedes Aufrichtbein 16 in Ausklapprichtung vor. Jedes Aufrichtbein 16 besteht aus zwei Teilen 161 und 162, die über ein Gelenk 19 miteinander verbunden sind. In dem in Fig.1 dargestellten Verbringungszustand der Mine sind die Aufrichtbeine 16 in entsprechende Ausnehmungen im Minengehäuse 11 eingeklappt, wobei die Aufrichtbeine 16 gefaltet sind und die beiden Beinteile 161,162 so aneinander geklappt sind, daß der Beinteil 161 innen und der Beinteil 162 außen liegt. Die gegen die Vorspannung der Drehfedern 18 in das Minengehäuse 11 bündig eingeklappten Aufrichtbeine 16 werden mittels eines Berstringes 20 in ihrer Einklappstellung gehalten. Nach Auftreffen des Minengehäuses 11 auf dem Erdboden 10 wird dieser Berstring 20 zerstört, und die Aufrichtbeine 16 klappen unter der Wirkung der Drehfedern 18 automatisch nach außen, wodurch sie insgesamt das Minengehäuse 11 in dessen vertikale Lage verbringen. In der Ausklappstellung werden die Aufrichtbeine 16 durch jeweils eine Sperrklinke 21 arretiert. Die Aufrichtstellung des Minengehäuses 11, in welcher die Mine in der Lage ist, den Wirkkörper 12 auszuschießen, ist in Fig.4 dargestellt.

Zur Bekämpfung von Zielen 14 innerhalb des Aktionsradius R des Wirkkörpers 12, verfügt die Landmine über eine akustische Überwachungsvorrichtung 22, die schallabstrahlende Ziele 14, wie Ketten- und Radfahrzeuge, im folgenden Schallquellen 14 genannt, die in ein durch den Aktionsradius R des Wirkkörpers 12 festgelegtes Überwachungsgebiet der Überwachungsvorrichtung 22 eindringen, detektiert und bzgl. deren Position, Fahrtrichtung und Fahrgeschwindigkeit vermißt und aus diesen sog. Zieldaten unter Berücksichtigung der Schußdaten des Wirkkörpers 12 einen voraussichtlichen Treffpunkt errechnet. Der Wirkkörper 12, wird aufgrund der von der Überwachungsvorrichtung 22 errechneten Daten mit zeitlichem Vorhalt aus dem Minengehäuse 11 gerichtet ausgestoßen, so daß beim zeitlichen Zusammentreffen vom Wirkkörper 12 und Schallquelle 14 im vorausberechneten Treffpunkt letztere von der Sprengladung des Wirkkörpers 12 wirkungsvoll zerstört werden kann.

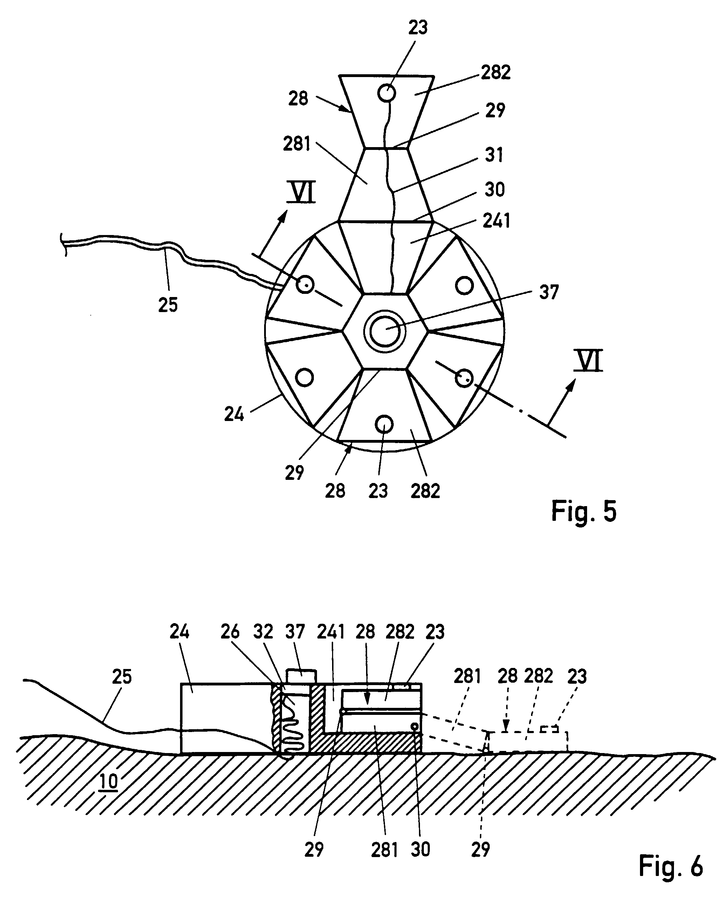

Die Überwachungsvorrichtung 22 weist hierzu eine Anzahl von Mikrofonen 23 auf, die in zwei Mikrofongruppen aufgeteilt ist, von denen die erste Mikrofongruppe räumlich dem Minengehäuse 11 und die zweiten Mikrofongruppe einem Trägerkörper 24 zugeordnet ist. Der Trägerkörper 24 ist am Minengehäuse 11 von diesem trennbar angeordnet und bleibt beim Trennen vom Minengehäuse 11 mit diesem über ein Verbindungskabel 25 verbunden, in dem eine Mehrzahl von elektrischen Leitungen enthalten ist. Bei der Landmine gem. Fig.1 bis 6 ist der Trägerkörper 24 scheibenförmig ausgebildet und mit seinen Außenmaßen den Abmessungen des Minengehäuses 11 angepaßt. Er ist an einer der beiden Stirnseiten des Minengehäuses 11, hier an der Unterseite 111 des Minengehäuses 11 mittels einer hier nicht dargestellten, lösbaren Haltevorrichtung befestigt. Wird die Landmine durch Verschießen mittels angetriebener Flugkörper, z.B. Raketen, oder durch Auswerfen von einem Fluggerät aus ausgebracht, so entfaltet sich in der Sinkphase der Landmine ein Fallschirm 27, wie in Fig.3 illustriert ist, so daß die Landmine mit noch einer akzeptablen Geschwindigkeit auf den Erdboden 10 aufprallt. Die Haltevorrichtung für den Trägerkörper 24 ist so ausgebildet, daß sie während der Sinkphase der Landmine am Fallschirm 27 den Trägerkörper 24 freigibt, so daß dieser sich vom Minengehäuse 11 trennt und mit höherer Fallgeschwindigkeit zu Boden fällt. Durch die höhere Sinkgeschwindigkeit des Trägerkörpers 24 wird das Verbindungskabel 25, was in entsprechender Länge lose in einer Kabelkammer 26 im Trägerkörper 24 einliegt (Fig.6), aus der Kabelkammer 26 mehr oder weniger vollständig ausgezogen. Vorteilhafterweise ist die Haltevorrichtung mit einem Abstoßglied für den Trägerkörper 24 ausgestattet, der mit sich lösender Haltevorrichtung dem scheibenförmigen Trägerkörper 24 eine Querbeschleunigung, bezogen auf die Minengehäuseachse, verleiht. Dadurch wird sichergestellt, daß der Trägerkörper 24 im größeren Abstand von dem Minengehäuse 11 auf dem Erdboden 10 aufschlägt, der in Fig.4 und 6 durch Schraffur symbolisiert ist.

Wie aus Fig.5 und 6 zu erkennen ist, sind in dem scheibenförmigen Trägerkörper 24 eine Mehrzahl von gefalteten Tragarmen 28 radial in den Trägerkörper 24 eingeklappt, wobei die eingeklappten Tragarme 28 im wesentlichen bündig innerhalb der Umrisse des Trägerkörpers 24 liegen. Jeder Tragarm 28 weist zwei Armabschnitte 281,282 auf, die über ein Gelenk 29 miteinander verbunden sind. Der innere, dem Trägerkörper 24 näher liegende Armabschnitt 281 ist mit einer quer zur Achse des Trägerkörpers 24 ausgerichteten Schwenkachse 30 im Trägerkörper 24 gehalten. Im eingeklappten Zustand liegt der innere Armabschnitt 281 am Grunde einer Radialausnehmung 241 im Trägerkörper 24 ein, und der äußere Armabschnitt 282 ist auf den Rücken des inneren Armabschnitts 281 aufgelegt. Die Mikrofone 23 der dem Trägerkörper 24 zugeordneten zweiten Mikrofongruppe sind am freien Ende der äußeren Armabschnitte 282 auf derer im ausgeklappten Zustand der Tragarme 28 vom Erdboden 10 abgekehrten Oberseite angeordnet und über innerhalb oder außerhalb der Tragarme 28 verlaufende Verbindungleitungen 31 (Fig.5) mit einem Steckerteil 32 in der Kabelkammer 26 (Fig.6) verbunden, wobei das Steckerteil 32 mit den elektrischen Leitungen im Verbindungskabel 25 verbunden ist. Die Tragarme 28 sind von einem hier nicht dargestellten Federsystem in Ausklapprichtung federbelastet, das bei Aufschlagen des Trägerkörpers 24 auf dem Erdboden 10 freigegeben wird, so daß die Tragarme 28 unter der Wirkung des Federsystems ausklappen und sich auf den Erdboden 10 auflegen, wie dies für einen Tragarm 28 in Fig.5 und 6 dargestellt ist. Nach Ausklappen aller Tragarme 28 liegen die Mikrofone 23 auf einem Kreisbogen mit einem relativ großen Durchmesser, der beispielsweise einen Meter beträgt, und bilden ein großflächiges Mikrofonarray.

Die Mikrofone 23 der dem Minengehäuse 11 zugeordneten ersten Mikrofongruppe sind am freien Ende der Aufrichtbeine 16 angeordnet und über innerhalb oder außerhalb der Aufrichtbeine 16 verlaufende Verbindungsleitungen 33 (Fig.4) mit einer Signalverarbeitungs- und Auswerteelektronik 34 der Überwachungsvorrichtung 22 verbunden, an die auch das von dem Trägerkörper 24 kommende Verbindungskabel 25 mit seinen elektrischen Leitungen angeschlossen ist. Wie in Fig.2 und 4 dargestellt ist, liegen die Mikrofone 23 nach Ausklappen der Aufrichtbeine 16 im gleichen Abstand voneinander auf einem Kreisbogen mit gegenüber dem Durchmesser des Minengehäuses 11 beträchtlich größerem Durchmesser, der beispielsweise ebenfalls 1 m beträgt. Auch diese Mikrofone 23 bilden ein großflächiges Mikrofonarray. In Fig.7 ist das von den Mikrofonen 23 der ersten Mikrofongruppe gebildete Mikrofonarray am Ort des Minengehäuses 11 mit 35 und das von den Mikrofonen 23 der zweiten Mikrofongruppe gebildete Mikrofonarray am Ort des Trägerkörpers 24 mit 36 bezeichnet. Nach Ausbringen der Mine sind die beiden Mikrofonarrays 35,36 in einem vom Zufall abhängigen Abstand d voneinander auf dem Erdboden 10 angeordnet. Über das Verbindungskabel 25 sind die beiden Mikrofonarrays 35,36 miteinander verbunden, so daß einerseits das Mikrofonarray 36 vom Minengehäuse 11 aus mit Strom versorgt wird und andererseits die Ausgangssignale des Mikrofonarray 36 der Signalverarbeitungs- und Auswerteelektronik 34 im Minengehäuse 11 zugeführt werden. Jedem Mikrofonarray 35,36 ist ein Beamformer zugeordnet, der mit Hilfe eines bekannten Beamform-Algorithmus aus den Mikrofonausgangssignalen die Empfangsrichtung einer einfallenden Schallwelle, bezogen auf eine im Mikrofonarray 35 bzw. 36 vorgegebene Bezugslinie bestimmt.

Da - wie bereits erwähnt - der Abstand d der beiden Mikrofonarrays 35,36 eine statistische Zufallsgröße ist, muß die Überwachungsvorrichtung 22 vor Inbetriebnahme kalibriert, d.h. zum einen der genaue Abstand d der Mikrofonarrays 35,36 und zum anderen ihre Ausrichtung zueinander bestimmt werden. Hierzu ist im Minengehäuse 11 ein akustischer Sender 46 und im Trägerkörper 24 ein akustischer Sender 37 (Fig.5 und 6) installiert, der über das Verbindungskabel 25 von der Signalverarbeitungs- und Auswerteelektronik 34 aktivierbar ist und mit jedem Aktivieren einen Schallimpuls abstrahlt. Die Schallimpulse des Schallsenders 37 werden von den Mikrofonen 23 des Mikrofonarray 35 am Minengehäuse 11 empfangen. Ein in der Signalverarbeitungs- und Auswerteelektronik 34 integrierter Prozessor mißt die Zeit vom Sendezeitpunkt des Schallimpulses bis zum Empfangszeitpunkt und berechnet in Verbindung mit der am Meßort herrschenden Schallgeschwindigkeit in Luft den Abstand d zwischen den beiden Mikrofonarrays 35,36 gemäß

$$d = \frac{c}{\tau} \qquad (1),$$

wobei c die Schallgeschwindigkeit am Meßort und $\tau$ die gemessene Schallimpulslaufzeit ist. Zur Erhöhung der Meßgenauigkeit wird bei der Schallgeschwindigkeit der Einfluß der Lufttemperatur gemäß der Beziehung

$$c \approx 331 \sqrt{1 + 0{,}004\,T} \qquad [m/s] \qquad (2),$$

berücksichtigt, wobei T die von einem Temperatursensor gemessene Lufttemperatur in Grad Celsius ist. Um eine ausreichend genaue Vermessung des Abstandes zwischen den Mikrofonarrays 35,36 sicherzustellen, werden vom Sender 37 so viele Schallimpulse abgestrahlt, und von den Mikrofonen 23 des Mikrofonarray 35 vermessen, bis die Mittelwerte der Meßergebnisse für die Laufzeit gegen vorgegebene Konfidenzintervalle konvergieren. Sollten extreme Witterungsbedingungen (Wolkenbrüche / Gewitter) nicht zu einer schnellen Konvergenz der Meßwerte führen, wird die Prozedur für einen vorgegebenen Zeitraum ausgesetzt und neu gestartet. Dies wird solange wiederholt, bis stabile Meßwerte erzielt wurden.

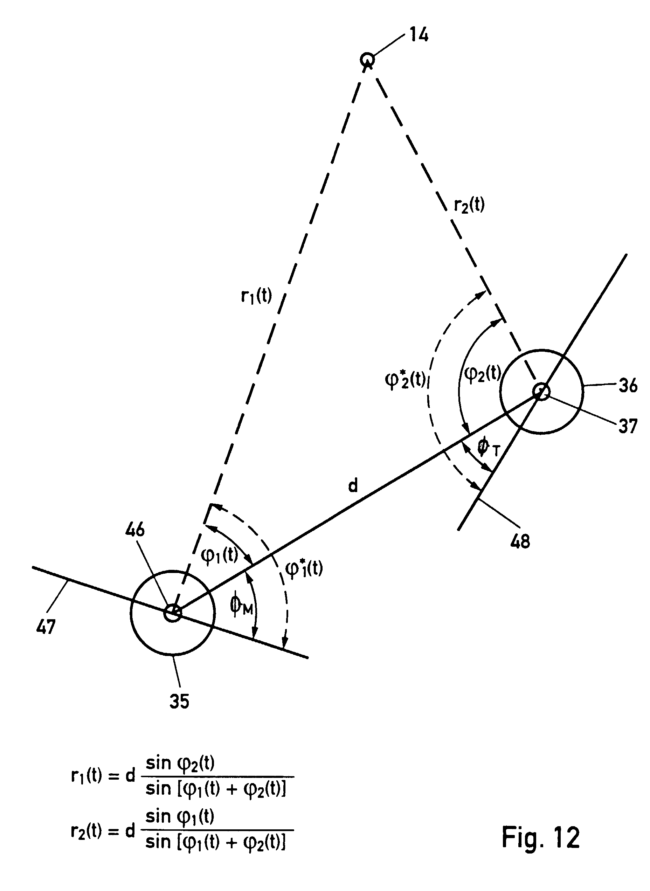

Zur Bestimmung der relativen Ausrichtung der Bezugslinien der beiden von den Mikrofongruppen aufgespannten Mikrofonarrays 35,36 wird auf Fig.12 verwiesen. Dort sind die Mikrofonarrays 35,36 durch Kreise angedeutet. Die Schallimpulssender im Trägerkörper 24 und im Minengehäuse 11 sind wiederum mit 37 und 46 gekennzeichnet. Die vom Schallsender 37 ausgesendeten Schallimpulse werden von dem Mikrofon 23 des Mikrofonarray 35 empfangen, und der Beamformer bestimmt die Einfallsrichtung der Schallimpulse, den Azimut- oder Peilwinkel $\Phi_m$ , bezogen auf eine innerhalb des Mikrofonarray 35 fest vorgegebene Bezugslinie 47, die beliebig in der Ebene liegen kann. Dann sendet der Schallsender 46 Schallimpulse aus, die von den Mikrofonen 23 des Mikrofonarray 36 empfangen werden. Der zugeordnete Beamformer bestimmt die Einfallsrichtung dieser Schallimpulse, also den Azimutoder Peilwinkel $\Phi_T$ zu der Bezugslinie 48, die innerhalb des Mikrofonarray 36 beliebig in der Ebene ausgerichtet sein kann. Um ausreichend genaue Winkelwerte für die Azimutwinkel $\Phi_M$ und $\Phi_T$ zu erhalten, werden - wie vorstehend bereits bei der Abstandsmessung beschrieben worden ist - auch hier so viele vom Sender 37 bzw. Sender 46 abgestrahlte Schallimpulse gemessen, bis die Mittelwerte der Meßergebnisse für den Azimutwinkel $\Phi_M$ bzw. $\Phi_T$ gegen vorgegebene Konfidenzintervalle konvergieren. Die genauen Azimutwinkel $\Phi_M$ und $\Phi_T$ werden in der Signal- und Auswerteelektronik 34 abgespeichert. Die den beiden Mikrofonarrays 35,36 jeweils zugeordneten Beamformer sind identisch ausgebildet. Ihr Aufbau und ihre Funktionsweise ist beispielsweise in der DE 35 43 792 A1 beschrieben. Grundsätzlich ist an jedem Mikrofon 23 eines Mikrofonarray 35,36 ein Verarbeitungskanal angeschlossen, in welchem ein Tiefpaßfilter und ein Zeitverzögerungsglied angeordnet sind. Alle Verarbeitungskanäle werden einem Summierer zugeführt, dessen Ausgang mit einem Maximumsucher verbunden ist. Am Ausgang des Maximumsuchers ist der Peil- oder Azimutwinkel $\Phi$ abnehmbar. Solche Beamformer sind auch aus der Sonartechnik bekannt.

Die Arbeitsweise der beschriebenen Landmine ist wie folgt:

Nach Ausbringung der Landmine und Trennung von Minengehäuse 11 und Trägerkörper 12 sowie nach der vorstehend beschriebenen Kalibrierung der Überwachungsvorrichtung 22 befindet sich die Mine zunächst in einem sog. Schlafmodus. Ein auf geringem Stromverbrauch optimierter Weckalgorithmus analysiert jedoch fortlaufend das akustisch und seismische Umgebungsgeräusch. Wenn eine fahrzeugspezifische ausreichende Amplitude über genügend lange Zeit entdeckt wird, wird die Signalverarbeitungs- und Auswerteelektronik 34 aktiviert. Die Mikrofone 23 der beiden Mikrofonarrays 35,36 empfangen den von der Schallquelle 14, die in den Überwachungsbereich der Überwachungsvorrichtung 22 eindringt, fortlaufend abgestrahltem Schall. Wie schon vorstehend bei der Kalibrierung beschrieben worden ist, ermitteln die Beamformer aus den Ausgangssignalen der Mikrofone 23 in den beiden Mikrofonarrays 35,36 jetzt die Einfallsrichtung des von der Schallquelle 14 abgestrahlten Schalls, also - wie in Fig.12 dargestellt ist - die Peilwinkel $\varphi_1^*(t)$ und $\varphi_2^*(t)$,

bezogen auf die jeweils vorgegebene Bezugslinie 47 bzw. 48 der Mikrofonarrays 35,36. Mit den abgespeicherten Azimutwinkeln $\Phi_M$ und $\Phi_T$ errechnet der in der Signal- und Auswerteelektronik 34 enthaltene Prozessor die wahren Peilwinkel $\varphi_1(t)$ und $\varphi_2(t)$

$$\varphi_1(t) = \varphi_1^*(t) - \phi_M \qquad (3)$$

$$\varphi_2(t) = \varphi_2^*(t) - \phi_T \qquad (4)$$

und errechnet mit den wahren Peilwinkeln $\varphi_1(t)$ und $\varphi_2(t)$ und dem Abstand d zwischen den Mikrofonarrays 35,36 nach bekannten trigonometrischen Gesetzen (Sinussatz) die Entfernungen $r_1(t)$ und $r_2(t)$ der Mikrofonarrays 35,36 zur Schallquelle 14, so daß deren Position fortlaufend bestimmt wird. Diese Art der Positionsbestimmung der Schallquelle 14 ist auch unter dem Begriff "Kreuzpeilung" bekannt.Aus der Änderung der fortlaufend vermessenen Positionen der Schallquelle 14 wird der Geschwindigkeitsvektor der Schallquelle 14 in Betrag und Richtung, also die Fahrgeschwindigkeit und die Fahrtrichtung der Schallquelle 14, bestimmt. Anhand dieser sogenannten Zieldaten errechnet der Prozessor mit den vorgegebenen Schußdaten für den Wirkkörper 12 den voraussichtlichen Treffpunkt von Schallquelle 14 und Wirkkörper 12 und gibt zu einem gegebenen Zeitpunkt den Wirkkörper 12 zum gerichteten Abschuß hin zum vorausbestimmten Treffpunkt frei.

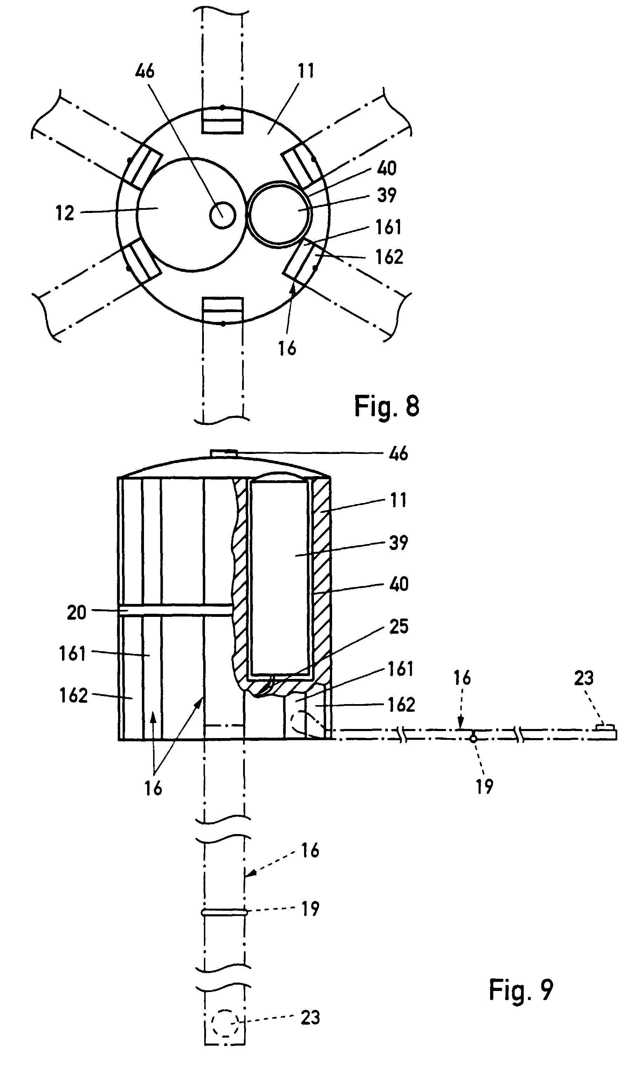

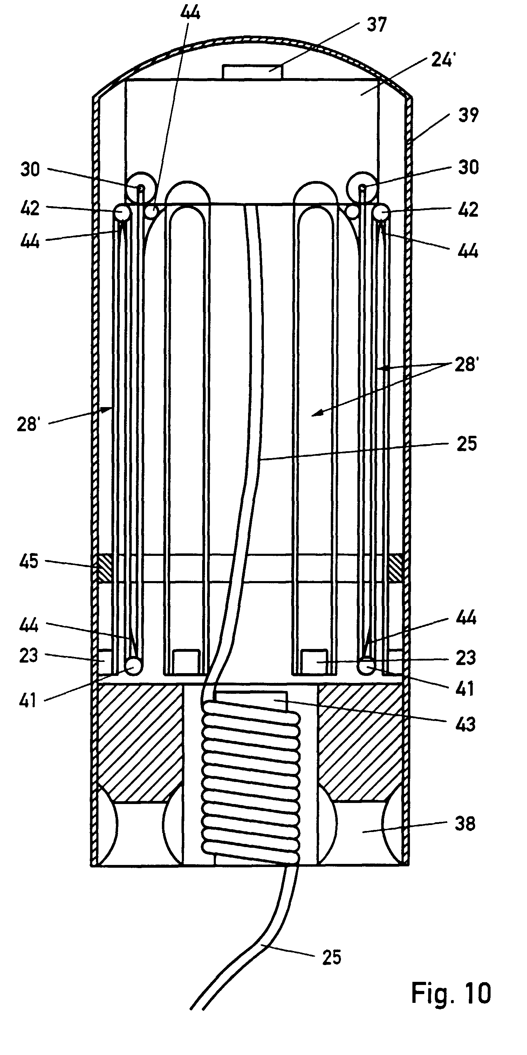

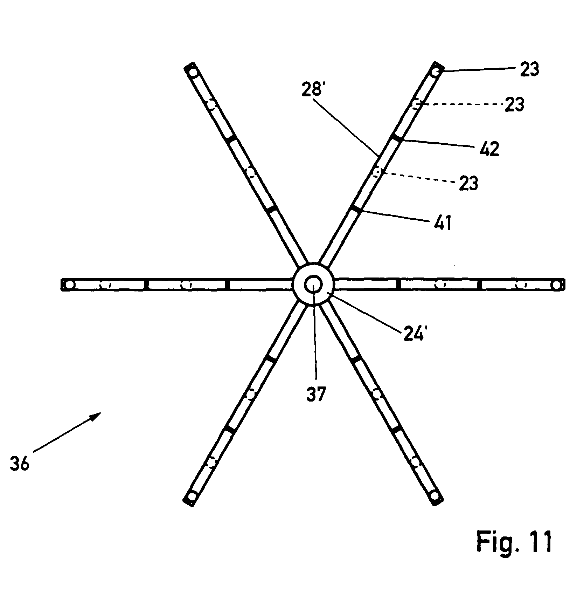

Die in Fig.9 bis 11 schematisch skizzierte Landmine ist gegenüber der vorstehend beschriebenen Landmine nur hinsichtlich des Trägerkörpers 24' modifiziert. Soweit gleiche Bauteile mit denen der Mine in Fig. 1 bis 6 übereinstimmen, sind sie mit gleichen Bezugszeichen versehen. Der Trägerkörper 24' ist mit einem pyrotechnischen Treibsatz 38 in einem Auswurfzylinder 39 zusammengefaßt (Fig.10), der in einer Auswurfkammer 40 im Minengehäuse 11 aufgenommen ist (Fig.8 und 9). Der Trägerkörper 24' ist wiederum mit insgesamt sechs Tragarmen 28' ausgestattet, die um gleiche Umfangswinkel versetzt am Trägerkörper 24' schwenkbar angeordnet sind. Die Tragarme 28' sind dreifach gefaltet, wobei die drei Armabschnitte jeweils über ein Gelenk 41 und 42 miteinander verbunden sind. Die dreifach aufeinander gefalteten Tragarme 28' sind vor Verbringung der Mine im Auswurfzylinder 39 aufgenommen, wobei sie sich in dessen Achsrichtung erstrecken. Der innenliegende Armabschnitt ist am Trägerkörper 24' in der Gelenkachse 17 gehalten, der äußerste Armabschnitt trägt an seinem freien Ende das Mikrofon 23. Das den Trägerkörper 24' mit dem Minengehäuse 11 verbindende Verbindungskabel 25 ist im Auswurfzylinder 39 lose aufgetrommelt und tritt an der Unterseite des Auswurfzylinder 39 über die Auswurfkammer 40 in den die Signalverarbeitungs- und Auswerteelektronik 34 aufnehmenden Raum im Minengehäuse 11 ein. Die einzelnen Armabschnitte der Tragarme 28' werden in der Faltstellung von einem durch Federn 44 angedeuteten Federsystem in Ausklapprichtung so vorgespannt, daß bei Freigabe der Tragarme 28' durch den Auswurfzylinder 39 diese automatisch in eine Strecklage übergehen, wie sie in Fig.11 dargestellt ist. Im Trägerkörper 24' ist wiederum der akustische Sender 37 sowie die Elektronik des Beamformers für das Mikrofonarray 36 aufgenommen. Das Minengehäuse 11 mit Aufrichtbeinen 16 und Wirkkörper 12 ist bis auf das zusätzliche Vorsehen der Auswurfkammer 14 in Aufbau und Funktionsweise unverändert gegenüber der mit Fig.1 bis 4 beschriebenen Mine.

Die nach Verschießen oder Auswerfen auf dem Erdboden 10 aufschlagende Landmine wird wie vorstehend beschrieben durch Bersten des Berstrings 20 und Ausklappen der Aufrichtbeine 16 vertikal aufgestellt, so daß damit auch die Achse der Auswurfkammer 40 vertikal ausgerichtet ist. Nunmehr wird der pyrotechnische Treibsatz 38 gezündet und der Auswurfzylinder 39 nach Art einer Rakete ausgestoßen. Nach Durchlaufen einer ballistischen Kurve fällt der Auswurfzylinder 39 zu Boden. Während der Sinkphase wird der Treibsatz 38 von dem Auswurfzylinder 39 abgeworfen und der Auswurfzylinder 39 von dem Trägerkörper 24' mit seinen Tragarmen 28' separiert. Die Tragarme 28 werden dabei durch einen Haltering 45 in ihrer gefalteten Lage zusammengehalten. Nach Aufschlagen des Trägerkörpers 24' auf dem Erdboden 10, wird der Haltering 45 automatisch gelöst, und die Tragarme 28' entfalten sich unter der Wirkung des Federsystems und nehmen ihre in Fig.11 dargestellte Strecklage ein. Die am freien Ende der Tragarme 28' angeordneten Mikrofone 23 bilden das Mikrofonarray 36. Die Überwachungsvorrichtung 22 arbeitet nunmehr in gleicher Weise wie vorstehend beschrieben.

Selbstverständlich ist es auch möglich, die vorstehend beschriebene Landmine gemäß Fig.1 bis 6 handverlesen auszulegen. In diesem Fall ist der Minenausleger gehalten, die Haltevorrichtung zwischen dem Minengehäuse 11 und dem scheibenförmigen Trägerkörper 24 manuell zu lösen und letzteren in einer möglichst großen Entfernung vom Minengehäuse 11 auf dem Erdboden 10 abzulegen. Der maximale Abstand des Trägerkörper 24 vom Minengehäuse 11 ist dabei durch die Länge des Verbindungskabels 25 festgelegt.

Die Erfindung ist nicht auf die vorstehend beschriebenen Ausführungsbeispiele beschränkt. So können natürlich eine beliebige Anzahl von Aufrichtbeinen und Tragarmen, die jeweils mit einem Mikrofon bestückt sind, vorgesehen werden. Jedes Aufrichtbein und jeder Tragarm kann darüber hinaus mit mehreren Mikrofonen ausgerüstet sein, die vorzugsweise im gleichen Längsabstand angeordnet sind. Zusätzlich kann sowohl im Minengehäuse als auch im Trägerkörper ein weiteres Mikrofon angeordnet werden, das jeweils mittig in den beiden von den Mikrofongruppen an Minengehäuse und Trägerkörper aufgespannten Mikrofonarrays liegt.

Durch die mittigen Mikrofone und durch die Vergrößerung der Mikrofonanzahl werden die Richtdiagramme der beiden Mikrofonarrays verbessert.

**Patentansprüche**

1. Landmine mit einem Minengehäuse (11), mit einem aus dem Minengehäuse (11) gerichtet ausstoßbaren Wirkkörper (12), mit an dem Minengehäuse (11) angeordneten, insbesondere ausklappbaren, Aufrichtbeinen (16) und mit einer akustisch empfindlichen Vorrichtung (22) zum Überwachen eines Gebietes auf eindringende Schallquellen (14), die eine Mehrzahl von Mikrofonen (23) und eine mit den Mikrofonen (23) verbundene Signalverarbeitungs- und Auswerteelektronik (34) aufweist, die aus den Mikrofonausgangssignalen fortlaufend Positionsdaten der Schallquelle (14) bestimmt, dadurch gekennzeichnet, daß am oder im Minengehäuse (11) ein von diesem trennbarer Trägerkörper (24; 24') angeordnet ist, der mit dem Minengehäuse (11) über ein beim Trennen ausziehbares, elektrische Leitungen enthaltendes Verbindungskabel (25) verbunden bleibt, daß die Mikrofone (23) in eine dem Minengehäuse (11) zugeordnete erste Mikrofongruppe und in eine dem Trägerkörper (24; 24') zugeordnete zweite Mikrofongruppe aufgeteilt sind und daß die Positionsdaten der Schallquelle (14) mittels Kreuzpeilung der Schallquelle (14) von beiden Mikrofongruppen aus ermittelt werden.

2. Mine nach Anspruch 1, dadurch gekennzeichnet, daß die Zuordnung der Mikrofone (23) so getroffen ist, daß jede Mikrofongruppe nach Trennen des Trägerkörpers (24; 24') vom Minengehäuse (11) ein großflächiges Array (35, 36) mit verteilt angeordneten Mikrofonen (23) bildet.

3. Mine nach Anspruch 2, dadurch gekennzeichnet, daß die Mikrofone (23) eines Mikrofonarray (35, 36) auf mindestens einem Kreisbogen großen Durchmessers, vorzugsweise äquidistant, liegen.

4. Mine nach Anspruch 2 oder 3, dadurch gekennzeichnet, daß die Mikrofone (23) der ersten Mikrofongruppe an jeweils einem der von dem Minengehäuse (11) abgekehrten Enden der Aufrichtbeine (16) und die Mikrofone (23) der zweiten Mikrofongruppe an jeweils einem vom Trägerkörper (24; 24') abgekehrten Ende eines Tragarms (28; 28) einer Mehrzahl von vom Trägerkörper (24; 24') automatisch abschwenkbaren Tragarmen (28; 28') angeordnet ist.

5. Mine nach Anspruch 4, dadurch gekennzeichnet, daß auf jedem Aufrichtbein (16) und jedem Tragarm (28) mehrere Mikrofone (23) mit Abstand voneinander angeordnet sind.

6. Mine nach einem der Ansprüche 1-5, dadurch gekennzeichnet, daß vorzugsweise mittig im Minengehäuse und Trägerkörper jeweils ein weiteres Mikrofon angeordnet ist.

7. Mine nach einem der Ansprüche 4-6, dadurch gekennzeichnet, daß die Aufrichtbeine (16) und die Tragarme (28; 28') jeweils gleichmäßig am Umfang des Minengehäuses (11) bzw. des Trägerkörpers (24; 24') verteilt angelenkt und über Gelenke (19; 41, 42) mindestens einmal gefaltet am Minengehäuse (11) bzw. Trägerkörper (24; 24'), vorzugsweise mit deren Außenabmessungen bündig, festgelegt sind, und nach Verbringen der Mine und Trennen des Trägerkörpers (24; 24') von dem Minengehäuse (11) selbsttätig von dem Minengehäuse (11) bzw. dem Trägerkörper (24; 24') mit Übergang zur Strecklage abschwenken.

8. Mine nach einem der Ansprüche 1 bis 7, dadurch gekennzeichnet, daß jeder Mikrofongruppe ein Beamformer zugeordnet ist, der aus den Ausgangssignalen (23) der der Mikrofongruppe zugehörigen Mikrofone (23) fortlaufend den Peilwinkel ($\varphi^*(t)$) zu einer in das Überwachungsgebiet eindringenden Schallquelle (14) bestimmt.

9. Mine nach einem der Ansprüche 1 bis 8, dadurch gekennzeichnet, daß im Trägerkörper (24; 24') und im Minengehäuse (11) jeweils ein von der Signalverarbeitungs- und Auswerteelektronik (34) aktivierbarer akustischer Sender (37, 46) zum Aussenden von Schallimpulsen angeordnet ist und daß die Signalverarbeitungs- und Auswerteeinheit (34) aus dem Schallimpulsempfang der Mikrofone (23) der ersten Mikrofongruppe und/oder dem Schallimpulsempfang der Mikrofone (23) der zweiten Mikrofongruppe die Entfernung (d) zwischen Minengehäuse (11) und Trägerkörper (24; 24') sowie die Peilrichtung ($\Phi_M$) des Minengehäuses (11) zum Trägerkörper (24; 24') und die Peilrichtung ($\Phi_T$) des Trägerkörpers (24; 24') zum Minengehäuse (11), jeweils bezogen auf eine im Mikrofonarray (35, 36) fest vorgegebene Bezugslinie (47, 48), berechnet.

10. Mine nach Anspruch 9, dadurch gekennzeichnet, daß der akustische Sender (37 bzw. 46) eine Vielzahl von Schallimpulsen aussendet und die Signalverarbeitungs- und Auswerteelektronik (34) eine Vielzahl von Entfernungs- und Peilrichtungswerten berechnet und daß die Schallimpulsaussendung beendet wird, wenn die Rechenwerte gegen vorgegebene Konfidenzintervalle konvergieren.

11. Mine nach einem der Ansprüche 1 bis 10, dadurch gekennzeichnet, daß der Trägerkörper (24) scheibenförmig mit an den Außendurchmesser des Minengehäuses (11) angepaßtem Durchmesser ausgebildet ist und an einer Stirnseite des Minengehäuses (11) in einer lösbaren Haltevorrichtung aufgenommen ist und daß die gefalteten Tragarme (28) radial im Trägerkörper (24) einliegen.

12. Luftverbringbare Mine nach Anspruch 11, dadurch gekennzeichnet, daß die Haltevorrichtung während der Sinkphase der Mine automatisch lösbar ausgebildet ist und vorzugsweise ein Abstoßglied aufweist, das dem freigegebenen Trägerkörper (24) eine Querbeschleunigung bezogen auf die Minengehäuseachse verleiht.

13. Mine nach einem der Ansprüche 1 bis 12, dadurch gekennzeichnet, daß der Trägerkörper (24') mit einem pyrotechnischen Treibsatz (38) in einem Auswurfzylinder (39) zusammengefaßt ist, der in einer Auswurfkammer (40) im Minengehäuse (11) aufgenommen ist, und daß die am Trägerkörper (24') angelegten, gefalteten Tragarme (28') axial im Auswurfzylinder (39) einliegen.

14. Mine nach einem der Ansprüche 1 bis 13, dadurch gekennzeichnet, daß das ausziehbare Verbindungskabel (25) im Trägerkörper (24) bzw. im Auswurfzylinder (39) lose einliegt oder aufgetrommelt ist.

**Claims**

1. Land mine with a mine housing (11), with an active body (12) which can be directionally ejected out of the mine housing (11), with erecting legs (16) which are disposed on the mine housing (11) and are in particular capable of swinging out and with an acoustically sensitive device (22) for monitoring an area for infiltrating sound sources (14) which has a plurality of microphones (23) and signal processing and evaluation electronics (34) which are connected to the microphones (23) and continuously determine position data of the sound source (14) from the microphone output signals, characterised in that on or in the mine housing (11) there is disposed a carrier (24; 24') which can be separated therefrom and which remains connected to a connecting cable (25) which can be pulled out on separation and contains electrical leads, that the microphones (23) are divided into a first microphone group co-ordinated with the mine housing (11) and a second microphone group co-ordinated with the carrier (24; 24'), and that the position data of the sound source (14) are determined by taking cross bearings of the sound source (14) from both microphone groups.

2. Mine as claimed in Claim 1, characterised in that the co-ordination of the microphones (23) is such that after separation of the carrier (24; 24') from the mine housing (11) each microphone group forms a wide-area array (35, 36) with microphones (23) distributed over it.

3. Mine as claimed in Claim 2, characterised in that the microphones (23) of a microphone array (35, 36) lie, preferably equidistantly, on at least one arc of a circle with a large diameter.

4. Mine as claimed in Claim 2 or 3, characterised in that the microphones (23) of the first microphone group are disposed in each case on one of the ends of the erecting legs (16) remote from the mine housing (11) and the microphones (23) of the second microphone group are disposed in each case on an end, which is remote from the carrier (24; 24'), of one supporting arm (28; 28) of a plurality of supporting arms (28; 28') which are capable of swinging out automatically from the carrier (24; 24').

5. Mine as claimed in Claim 4, characterised in that a plurality of microphones (23) are disposed spaced from one another on each erecting leg (16) and each supporting arm (28).

6. Mine as claimed in one of Claims 1-5, characterised in that a further microphone is disposed in each case preferably in the centre of the mine housing and the carrier.

7. Mine as claimed in one of Claims 4-6, characterised in that the erecting legs (16) and the supporting arms (28; 28') are articulated in each case in uniform distribution on the circumference of the mine housing (11) or of the carrier (24; 24') respectively and are folded at least once and fixed on the mine housing (11) or carrier (24; 24') respectively, preferably with their external dimensions flush, by way of hinge joints (19; 41, 42), and swing out automatically from the mine housing (11) or from the carrier (24; 24') respectively with the transition to the extended position after delivery of the mine and separation of the carrier (24; 24') from the mine housing (11).

8. Mine as claimed in one of Claims 1 to 7, characterised in that each microphone group has associated with it a beam former which from the output signals (23) of the microphones (23) belonging to the microphone group continuously determines the bearing angle ($\varphi^*(t)$) to a sound source (14) infiltrating into the monitored area.

9. Mine as claimed in one of Claims 1 to 8, characterised in that an acoustic transmitter (37, 46) which can be activated by the signal processing and evaluation electronics (34) for the emission of sound pulses is disposed in each case in the carrier (24; 24') and in the mine housing (11), and that from the sound pulse reception of the microphones (23) of the first microphone group and/or the sound pulse reception of the microphones (23) of the second microphone group the signal processing and evaluation unit (34) calculates the distance (d) between the mine housing (11) and the carrier (24; 24') as well as the bearing direction ($\Phi_M$) of the mine housing (11) relative to the carrier (24; 24') and the bearing direction ($\Phi_T$) of the carrier (24; 24') relative to the mine housing (11), in each case relative to a datum line (47, 48) predetermined and fixed in the microphone array (35, 36).

10. Mine as claimed in Claim 9, characterised in that the acoustic transmitter (37 or 46) transmits a plurality of sound pulses and the signal processing and evaluation electronics (34) calculate a plurality of distance and bearing direction values, and that the sound pulse transmission is ended when the calculated values converge towards predetermined confidence intervals.

11. Mine as claimed in one of Claims 1 to 10, characterised in that the carrier (24) is constructed in the form of a disc with its diameter adapted to the external diameter of the mine housing (11) and is received in a releasable holding device on an end face of the mine housing (11), and that the folded supporting arms (28) lie radially in the carrier (24).

12. Air-delivered mine as claimed in Claim 11, characterised in that the holding device is constructed so that it is automatically releasable during the descent phase of the mine and preferably has a repulsion member which gives the released carrier (24) a lateral acceleration relative to the axis of the mine housing.

13. Mine as claimed in one of Claims 1 to 12, characterised in that the carrier (24') is put together with a pyrotechnic charge (38) in an ejection cylinder (39) which is received in an ejection chamber (40) in the mine housing (11), and that the folded supporting arms (28') laid on the carrier (24') lie axially in the ejection cylinder (39).

14. Mine as claimed in one of Claims 1 to 13, characterised in that the connecting cable (25) which can be pulled out is laid loosely or coiled on a drum in the carrier (24) or in the ejection cylinder (39) respectively.

**Revendications**

1. Mine terrestre comprenant un corps de mine (11), un corps actif (12) éjectable de façon directionnelle du corps de mine (11), des jambes de redressement (16) disposées sur le corps de mine (11), lesquelles peuvent notamment être dépliées, et un dispositif à sensibilité acoustique (22) servant à surveiller une zone pour repérer les sources sonores (14) y pénétrant, lequel est équipé d'une pluralité de microphones (23) et d'une unité électronique de traitement et d'exploitation de signaux (34) liée aux microphones (23) laquelle, à partir des signaux émis par les microphones, détermine continuellement les données de position de la source sonore (14); caractérisée en ce que sur ou dans le corps de mine (11) est placé un élément porteur (24; 24') se détachant du corps de mine (11) en restant lié au corps de mine (11) par un câble de raccordement (25) à conducteurs électriques, ledit câble étant extractible au moment de la séparation, que les microphones (23) sont répartis en un premier groupe de microphones affecté au corps de mine (11) et un second groupe de microphones affecté à l'élément porteur (24; 24') et que les données de position de la source sonore (14) sont déterminées à partir des deux groupes de microphones au moyen d'un relèvement croisant de la source sonore (14).

2. Mine suivant revendication 1, caractérisée en ce que l'affectation des microphones (23) est réalisée de telle façon que, dès la séparation de l'élément porteur (24; 24') du corps de mine (11), chaque groupe de microphones forme un réseau (35, 36) de microphones (23) distribués sur une grande surface.

3. Mine suivant revendication 2, caractérisée en ce que les microphones (23) d'un réseau de microphones (35, 36) sont positionnés, de préférence de façon équidistante, sur au moins un arc de cercle de grand diamètre.

4. Mine suivant revendication 2 ou 3, caractérisée en ce que les microphones (23) du premier groupe de microphones sont disposés chacun sur l'une des extrémités opposées au corps de mine (11) des jambes de redressement (16) et les microphones (23) du second groupe de microphones sont disposés chacun sur l'extrémité opposée à l'élément porteur (24; 24') d'un bras-support (28; 28) d'une pluralité de bras-supports (28; 28') se dépliant de façon automatique.

5. Mine suivant revendication 4, caractérisée en ce que plusieurs microphones (23) sont disposés de façon espacée sur chaque jambe de redressement (16) et chaque bras-support (28).

6. Mine suivant l'une quelconque des revendications 1 à 5, caractérisée en ce qu'un microphone supplémentaire est disposé, de préférence de façon centrée, dans le corps de mine aussi bien que dans l'élément porteur.

7. Mine suivant l'une quelconque des revendications 4 à 6, caractérisée en ce que les jambes de redressement (16) et les bras-supports (28; 28') sont articulés respectivement sur le corps de mine (11) et l'élément porteur (24; 24'), distribués régulièrement sur la circonférence respective du corps de mine (11) et de l'élément porteur (24; 24') et pliés au moins une fois par des articulations (19; 41, 42) respectivement contre le corps de mine (11) et l'élément porteur (24; 24'), de préférence à fleur de leurs dimensions extérieures, et sont dépliés automatiquement, après le lancement de la mine et la séparation de l'élément porteur (24; 24') du corps de mine (11), en s'écartant respectivement du corps de mine (11) et de l'élément porteur (24; 24') pour passer en position étendue.

8. Mine suivant l'une quelconque des revendications 1 à 7, caractérisée en ce qu'un beamformer est affecté à chaque groupe de microphones lequel, à partir des signaux (23) émis par les microphones (23) appartenant au groupe de microphones, détermine continuellement le gisement ($\varphi^*$ (t)) par rapport à une source sonore (14) pénétrant dans la zone de surveillance.

9. Mine suivant l'une quelconque des revendications 1 à 8, caractérisée en ce que l'élément porteur (24; 24') et le corps de mine (11) comportent chacun un transmetteur acoustique (37, 46) pouvant être activé par l'unité électronique de traitement et d'exploitation de signaux (34) pour transmettre des bruits impulsionnels et que l'unité de traitement et d'exploitation de signaux (34) calcule, à partir des bruits impulsionnels reçus par les microphones (23) du premier groupe de microphones et/ou des bruits impulsionnels reçus par les microphones (23) du second groupe de microphones, la distance (d) entre le corps de mine (11) et l'élément porteur (24; 24') ainsi que la droite de relèvement ($\phi_M$) du corps de mine (11) vers l'élément porteur (24; 24') et la droite de relèvement ($\phi_T$) de l'élément porteur (24; 24') vers le corps de mine (11), dans tous les cas par rapport à une ligne de référence (47, 48) prédéfinie dans le réseau de microphones (35, 36).

10. Mine suivant revendication 9, caractérisée en ce que le transmetteur acoustique (respectivement 37 et 46) transmet une multitude de bruits impulsionnels et l'unité électronique de traitement et d'exploitation de signaux (34) calcule une multitude d'informations de distance et de droites de relèvement et que l'émission de bruits impulsionnels se termine lorsque les valeurs calculées convergent vers les intervalles de confiance donnés.

11. Mine suivant l'une quelconque des revendications 1 à 10, caractérisée en ce que l'élément porteur (24) est conçu en forme de disque avec un diamètre adapté au diamètre extérieur du corps de mine (11) et logé dans un support détachable sur un front du corps de mine (11) et que les bras-supports (28) pliés sont placés de façon radiale dans l'élément porteur (24).

12. Mine aéroportable suivant revendication 11, caractérisée en ce que le support est conçu de façon à se détacher automatiquement pendant la phase de descente et dispose de préférence d'un organe de répulsion qui provoque une accélération transversale par rapport à l'axe du corps de mine de l'élément porteur (24) libéré.

13. Mine suivant l'une quelconque des revendications 1 à 12, caractérisée en ce que l'élément porteur (24'), conjointement avec une charge propulsive, est disposé dans un cylindre d'éjection (39) celui-ci étant logé dans une chambre d'éjection (40) dans le corps de mine (11), et que les bras-supports (28') pliés contre l'élément porteur (24') sont placés de façon axiale dans le cylindre d'éjection.

14. Mine suivant l'une quelconque des revendications 1 à 13, caractérisée en ce que le câble de raccordement (25) extractible est placé de façon libre ou enroulée sur un tambour dans l'élément porteur (24) ou le cylindre d'éjection (39).

Fig. 1

Fig. 2

Fig. 3

Fig. 4

13

Fig. 5

Fig. 6

Fig.7

Fig. 8

Fig. 9

Fig. 10

Fig. 11

$$r_1(t) = d \frac{\sin \varphi_2(t)}{\sin [\varphi_1(t) + \varphi_2(t)]}$$

$$r_2(t) = d \frac{\sin \varphi_1(t)}{\sin [\varphi_1(t) + \varphi_2(t)]}$$

Fig. 12